# EUROPÄISCHE PATENTANMELDUNG

(11) **EP 3 696 571 A1**
(43) Veröffentlichungstag der Anmeldung: **19.08.2020**
(21) Anmeldenummer: 19156675.1
(22) Anmeldetag: 12.02.2019
(51) Int. Cl.: G01S 13/42, G01S 13/93, H01Q 21/06

(54) **ANTENNENANORDNUNG FÜR EIN RADAR-MESSSYSTEM**

(71) Anmelder: ZF Friedrichshafen AG, 88046 Friedrichshafen (DE); TRW Automotive Inc., Livonia, MI 48150-2122 (US)
(72) Erfinder: Alhumaidi, Mouhammad, 88045 Friedrichshafen (DE); Cinglant, Kevin, Livonia, MI Michigan 48150-2122 (US)
(74) Vertreter: ZF Friedrichshafen AG

(57) **Zusammenfassung**

Antennenanordnung (10) für ein RADAR Messsystem, umfassend mehrere Empfangsantennen (12) und mehrere Sendeantennen (14), wobei ein Großteil der Empfangsantennen (Rx1, Rx3, Rx4) in einer ersten Ebene (16) liegen und entlang dieser ersten Ebene (16) angeordnet sind und wobei ein Großteil der Sendeantennen (Tx1, Tx3) in einer zweiten Ebene (20) liegen und entlang dieser zweiten Ebene (20) angeordnet sind, wobei eine der Empfangsantennen (Rx2) in einer ersten Richtung (18) außerhalb der ersten Ebene (16) angeordnet ist und einen ersten Ebenenabstand (16b) zu der ersten Ebene (16) aufweist, wobei eine der Sendeantennen (Tx2) in einer zweiten Richtung (22) außerhalb der zweiten Ebene (20) angeordnet ist und einen zweiten Ebenenabstand (20b) zu der zweiten Ebene (20) aufweist, wobei die zweite Richtung (22) entgegengesetzt der ersten Richtung (18) weist.

Zudem wird RADAR Messsystem mit einer derartigen Antennenanordnung beschrieben.

## Beschreibung

Die Erfindung betrifft eine Antennenanordnung für ein RADAR-Messsystem sowie ein RADAR-Messsystem mit einer solchen Antennenanordnung.

Die DE10 2014 219 113 A1 beschreibt eine MIMO-Radarvorrichtung mit mehreren Sendeantenennen und mehreren Empfangsantennen. Bezüglich der in einer horizontalen Richtung gleichmäßig verteilten Sende- und Empfangsantennen sind jeweils eine Sendeantenne und eine Empfangsantenne in vertikaler Richtung versetzt zu den übrigen Antennen ausgebildet. Der vertikale Versatz von Sendeantenne und Empfangsantenne erfolgt hierbei in derselben Richtung. Dadurch wird eine Antennenanordnung bereitgestellt, die gegenüber einen Seitenwinkel und einen Höhenwinkel auflösen kann. Es ist die Aufgabe eine Antennenanordnung für ein RADAR-Messsystem bereitzustellen, welches eine verbesserte Auflösung über einen Azimutwinkel bereitstellt und zudem eine gute Auflösung gegenüber dem Elevationswinkel ermöglicht.

Diese Aufgabe wird gelöst durch eine Antennenanordnung nach Patentanspruch 1. Die abhängigen Ansprüche stellen vorteilhafte Ausführungsvarianten der Antennenanordnung dar.

Die Antennenanordnung ist insbesondere für ein MIMO-Radar geeignet, Multiple Input Multiple Output Radar. Das RADAR-Messsystem ist vorzugsweise als mobiles RADAR ausgebildet. Ein mobiles RADAR ist dadurch gekennzeichnet, dass es sich normalerweise während des Betriebs im Raum fortbewegt. Dies ist beispielweise bei einem RADAR Messsystem, welches an einem Kraftfahrzeug ausgebildet ist der Fall. Solche RADAR Messsysteme an Kraftfahrzeugen sind einerseits sehr kompakt ausgebildet und haben andererseits hohe Anforderungen an die Echtzeiterfassung von Objekten mit großer Genauigkeit. Insbesondere ist das RADAR-Messsystem mit der im weiteren ausführlich beschriebenen Antennenanordnung an einem Kraftfahrzeug an einem Lastkraftfahrzeug oder an einer Arbeitsmaschine ausgebildet.

Die Antennenanordnung ist als zweidimensionale Antennenanordnung ausgebildet und umfasst mehrere Empfangsantennen und mehrere Sendeantennen. Jede dieser Antennen weist ein Phasenzentrum auf. Im Weiteren wird die Ausgestaltung der Antennenanordnung, insbesondere die Anordnung der Empfangsantennen und derer Phasenzentren. Die Sendeantennen und die Empfangsantennen sind vorzugsweise als Patchantennen ausgebildet.

Ein Großteil der Empfangsantennen liegt in einer ersten Ebene und sind entlang dieser Ebene angeordnet. Der Großteil entspricht allen Empfangsantennen bis auf eine einzige oder mehr als 50% der Empfangsantennen. Die erste Ebene ist bei einer Draufsicht auf eine solche Antennenanordnung und auch später im eingebauten Zustand in einem mobilen Radar oder einem Fahrzeug vorzugsweise horizontal ausgerichtet. Die Empfangsantennen die in der ersten Ebene liegen sind vorzugsweise in gleichbleibenden Abständen zueinander angeordnet. Mit Vorteil ist bezüglich der Empfangsantennen an jeder Position entlang der gleichmäßigen Verteilung der Empfangsantennen eine Empfangsantenne ausgebildet. Dementsprechend gibt es entlang der Verteilung der Empfangsantennen innerhalb der Ebene keine Fehlstellen von Empfangsantenne. Die Verteilung der Empfangsantennen wird in der Figurenbeschreibung durch eine erste Rasterverteilung beschrieben.

Des Weiteren liegt ein Großteil der Sendeantennen in einer zweiten Ebene und sind entlang dieser Ebene angeordnet. Der Großteil entspricht allen Sendeantennen bis auf eine einzige oder mehr als 50% der Sendeantennen. Die zweite Ebene ist bei einer Draufsicht auf eine solche Antennenanordnung und auch später im eingebauten Zustand in einem mobilen Radar oder einem Fahrzeug vorzugsweise horizontal ausgerichtet. Die Sendeantennen die in der zweiten Ebene liegen sind an Rasterpositionen einer gleichmäßigen zweiten Rasterverteilung angeordnet. Benachbarte Rasterpositionen der zweiten Rasterverteilung, die sich entlang der zweiten Ebene verteilen, weisen gleichmäßige Abstände auf. Bezüglich der Sendeantennen kann an jeder Rasterposition entlang der zweiten Rasterverteilung eine Sendeantenne ausgebildet sein. Vorzugsweise ist nicht an jeder Rasterposition der zweiten Rasterverteilung eine Sendeantenne angeordnet. Dementsprechend gibt es entlang der zweiten Rasterverteilung für einzelne oder mehrere Rasterpositionen Fehlstellen von Sendeantennen.

Die erste Ebene und die zweite Ebene sind vorzugsweise parallel zueinander ausgebildet und vertikal zueinander versetzt ausgebildet. Mit Vorteil ist die zweite Ebene der Sendeantennen vertikal gesehen unterhalb der ersten Ebene der Empfangsantennen angeordnet. Dies ist vorteilhafterweise auch nach dem Einbau an einem Fahrzeug der Fall.

Des Weiteren ist zumindest eine der Empfangsantennen, insbesondere eine einzige Empfangsantenne, in einer ersten Richtung außerhalb der ersten Ebene angeordnet und weist einen ersten Ebenenabstand zu der ersten Ebene auf. Die erste Richtung zeigt vorzugsweise in eine vertikale Richtung und ist senkrecht zur ersten Ebene. Des Weiteren ist zumindest eine der Sendeantennen, insbesondere eine einzige Sendeantenne, in einer zweiten Richtung außerhalb der zweiten Ebene angeordnet und weist einen zweiten Ebenenabstand zu der zweiten Ebene auf. Die zweite Richtung zeigt vorzugsweise ebenfalls in eine vertikale Richtung und ist senkrecht zu zweiten Ebene. Insbesondere sind die erste Richtung und die zweite Richtung parallel zueinander ausgebildet. Der erste Ebenenabstand und der zweite Ebenenabstand können identisch oder unterschiedlich sein.

Jedoch weist die zweite Richtung in die entgegengesetzte Richtung der ersten Richtung. Der Versatz des Empfangselements gegenüber der ersten Ebene erfolgt somit in der entgegengesetzten Richtung des Versatzes des Sendeelements gegenüber der zweiten Ebene.

Durch eine solche Antennenanordnung mit Empfangsantennen und Sendeantennen wird ein virtuelles Antennen Array mit drei Ebenen bereitgestellt. Insbesondere ergeben sich für die zentrale Ebene der drei Ebenen eine Vielzahl an virtuellen Kanälen, die gleichmäßig und ohne Lücken verteilt sind. Dadurch wird eine detaillierte und genaue Erfassung von Zielen über den Azimutwinkel bereitgestellt. Durch die beiden weiteren Ebenen, die der zentralen Ebene benachbart angeordnet sind wird zudem eine Auflösung von Zielen gegenüber dem Elevationswinkel bereitgestellt.

Im Weiteren sind vorteilhafte Ausführungsvarianten der Antennenanordnung erläutert.

Mit besonderem Vorteil sind der erste Ebenenabstand und der zweite Ebenenabstand identisch.

Der erste und der zweite Ebenenabstand sind günstigerweise zu 1,5 λ gewählt. λ entspricht hierbei der Wellenlänge der ausgesendeten und empfangenen elektromagnetischen Wellen des RADAR-Messsystems. Durch die Wahl eines gleichmäßigen Abstands bei entsprechendem Versatz in entgegengesetzte Richtungen werden bezüglich des virtuellen Antennen Arrays genau drei Ebenen für virtuelle Kanäle bereitgestellt, die gleichmäßig beabstandet voneinander ausgebildet sind.

Günstigerweise weist ein Großteil der Empfangsantennen entlang der ersten Ebene einen gleichmäßigen ersten Abstand zueinander auf.

Dieser Abstand ist insbesondere zu 3 λ gewählt. Der gleichmäßige erste Abstand entspricht der bereits zuvor erwähnten gleichmäßigen Verteilung der Empfangsantennen entlang der ersten Ebene. Insbesondere weisen alle Empfangsantennen, die auf der ersten Ebene angeordnet sind einen derart gleichmäßigen ersten Abstand zu benachbarten auf der ersten Ebene liegenden Empfangselementen auf.

Gemäß einer vorteilhaften Ausführungsvariante weicht zumindest eine der Empfangsantennen entlang der ersten Ebene einen abweichenden Abstand von einer benachbarten Empfangsantenne auf.

Der abweichende Abstand ist zu dem ersten Abstand verschieden. Nutzt man ausschließlich gleichmäßig beabstandet Empfangsantennen so sind die ermittelten Positions- und Geschwindigkeitsinformationen detektierter Zeile mehrdeutig. Durch Anordnen zumindest einer der Empfangsantennen, insbesondere genau einer einzigen Empfangsantenne, außerhalb der gleichmäßigen Verteilung entlang der ersten Ebene kann diese Mehrdeutigkeit aufgelöst werden. Durch dieses außerhalb des gleichmäßigen Rasters angeordnete Empfangsantenne wird eine zusätzliche Information bereitgestellt durch welche eine eindeutige Positions- und Geschwindigkeitsbestimmung bereitgestellt wird. Zudem sind der abweichende Abstand und der erste Abstand keine vielfachen voneinander. Beispielsweise wird der abweichende Abstand zu 1,29 λ gewählt.

Es wird weiter vorgeschlagen, dass die Empfangsantenne die außerhalb der ersten Ebene angeordnet ist zugleich den abweichenden Abstand ausbildet.

Eine solche Empfangsantenne stellt aufgrund deren Anordnung eine eindeutige Zielbestimmung und auch eine Auflösungsfähigkeit des RADARs gegenüber dem Elevationswinkel bereit. Mit besonderem Vorteil ist lediglich eine einzige Empfangsantenne aller Empfangsantennen derart ausgebildet.

Insbesondere ist diese Empfangsantenne auch die einzige außerhalb der ersten Ebene angeordnete und zudem die einzige außerhalb der gleichmäßigen Verteilung entlang der ersten Ebene ausgebildete Empfangsantenne. Dadurch ist der Großteil, insbesondere alle bis auf eine der Empfangsantennen, in einer Ebene ausgebildet und zugleich in einem gleichmäßigen Abstand zueinander angeordnet. Die einzelne Empfangsantenne außerhalb der gleichmäßigen Verteilung und außerhalb der ersten Ebene stellt eine eindeutige Informationsermittlung und eine Auflösung in Elevation bereit.

Mit Vorteil entspricht der Abstand benachbarter Sendeantenne, insbesondere aller Sendeantennen, einem zweiten Abstand oder einem Vielfachen des zweiten Abstands.

Mit anderen Worten ist ein Raster entlang der zweiten Ebene bereitgestellt bei dem benachbarte Positionen einen zweiten Abstand zueinander aufweisen. Die Sendeantennen können sind an den einzelnen Positionen des Rasters angeordnet wobei nicht an jeder Position eine Sendeantenne ausgebildet sein muss. Dementsprechend kann eine Sendeantenne entlang der zweiten Ebene eine benachbarte Sendeantenne mit einem zweiten Abstand oder mit einem Vielfachen des zweiten Abstands aufweisen. Die Sendeantennen sind günstigerweise alle auf den vorgegebenen Rasterpositionen entlang der zweiten Ebene angeordnet wobei es unerheblich ist ob eine solche Sendeantenne auf der zweiten Ebene liegt oder einen Abstand zu dieser zweiten Ebene aufweist.

Insbesondere ist der zweite Abstand zu 3 λ gewählt. Bei einer beispielhaften Antennenanordnung mit drei Sendeantennen Tx1, Tx2, Tx3 weist eine entlang der zweiten Ebene eine erste Sendeantenne Tx1 zu einer zweiten Sendeantenne Tx2 einen Abstand 3 λ auf, wobei entlang der zweiten Ebene die zweite Sendeantenne Tx2 zu der dritten Sendeantenne Tx3 einen Abstand von 6 λ aufweist. Insbesondere ist die zweite Sendeantennen Tx2 außerhalb der zweiten Ebene mit einem zweiten Ebenenabstand angeordnet.

Es wird weiter vorgeschlagen, dass der erste Abstand und der zweite Abstand identisch sind.

Durch die identische Ausbildung des ersten Abstands und des zweiten Abstands wird eine gleichmäßige Verteilung der virtuellen Kanäle innerhalb des virtuellen Antennen Arrays bereitgestellt. Insbesondere ist ein Großteil, also mehr als 50%, der virtuellen Kanäle, auf virtuellen Rasterpositionen einer Virtuellen Rasterverteilung entlang der drei virtuellen Ebenen angeordnet. Ausschließlich virtuelle Kanäle die sich aus einer Empfangsantenne ergeben, die einen abweichenden Abstand aufweisen, sind außerhalb der Rasterpositionen angeordnet. Da die Sendeantennen günstigerweise keinen abweichende Abstand aufweisen entspricht der Abstand der virtuellen Kanäle, die nicht auf virtuellen Rasterpositionen angeordnet sind dennoch einem Vielfachen des virtuellen Abstands der virtuellen Rasterpositionen.

Insbesondere kann durch die identische Ausbildung des ersten Abstands und des zweiten Abstands eine zentrale virtuelle Ebene bereitgestellt werden, die an allen Positionen mit virtuellen Kanälen besetzt ist. Dementsprechend weist die virtuelle Rasterverteilung der zentralen virtuellen Ebene keine zwischenliegenden Fehlstellen von virtuellen Kanälen auf. Dadurch ist die Genauigkeit der Ermittlung von Zielen über den Azimutwinkel besonders genau.

Der erste Abstand und / oder der zweite Abstand sind vorzugsweise ein vielfaches des ersten Ebenenabstands und / oder des zweiten Ebenenabstands, insbesondere doppelt so groß.

Mit besonderem Vorteil weist die Antennenanordnung drei Sendeantennen und vier Empfangsantennen auf.

Eine solche Antennenanordnung kann durch einen einzelnen Chip verarbeitet werden. Ist die Anzahl von Sende- und Empfangsantennen großer, so kann die Auswertung nur über eine Kaskadenschaltung mehrere Chips erfolgen. Dementsprechend wird mithilfe einer derartigen Antennenanordnung ein kostengünstiges RADAR-Messsystem bereitgestellt.

Die vorstehende Aufgabe wird zudem durch ein RADAR-Messsystem mit einer Antennenanordnung nach einem der Patentansprüche 1 bis 8 oder nach zumindest einer der in der Beschreibung gemachten Ausführungsvarianten gelöst.

Das RADAR-Messsystem ist gemäß der Ausführungen an anderer Stellen dieser Schrift ausgebildet.

Mit besonderem Vorteil weist dieses RADAR-Messsystem einen einzelnen Chip auf, der die Rohdaten der Antennenanordnung auswertet.

Dadurch wird ein kostengünstiges RADAR-Messsystem bereitgestellt.

Die Antennenanordnung und das RADAR-Messsystem werden im Weiteren anhand von zwei Figuren beispielhaft und detailliert erläutert. Es zeigen:
- Figur 1: Antennenanordnung in einer Draufsicht;
- Figur 2: Virtuelles Antennen Array der Antennenanordnung aus Figur 1.

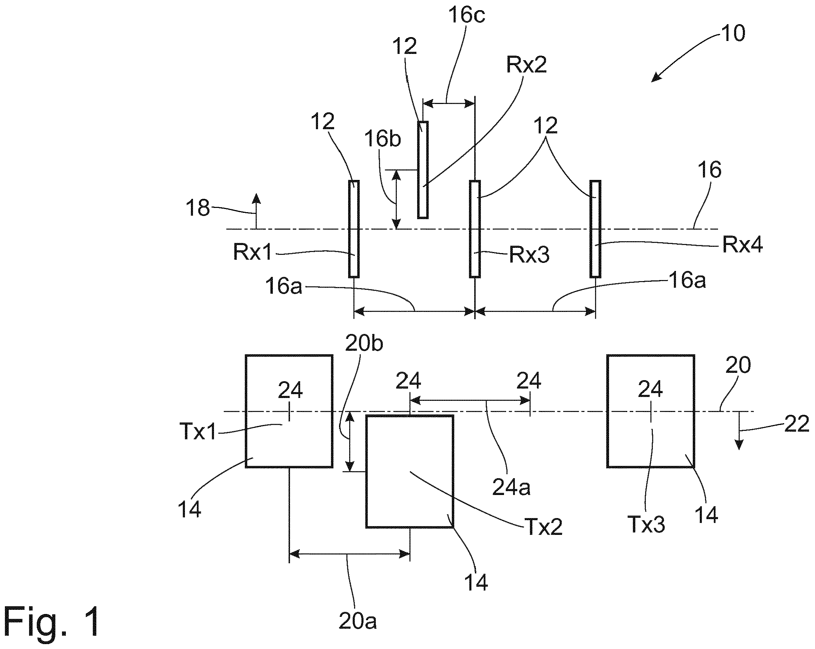

In der Figur 1 ist eine zweidimensionale Antennenanordnung 10 in einer Draufsicht dargestellt. Die Antennenanordnung ist Teil eines RADAR-Messsystems, welches hier nicht gezeigt ist. Insbesondere handelt es sich um eine Antennenanordnung für ein mobiles RADAR, also ein RADAR-Messsystem, welches an einem Fahrzeug ausgebildet ist und der Erkennung von Zielen in der Umgebung des RADAR-Messsystems dient.

Die Antennenanordnung 10 umfasst vier Empfangsantennen 12, Rx1 bis Rx4 und drei Sendeantennen 14, Tx1 bis Tx3. Bezüglich der Figur 1 sind insbesondere die Relativabstände zwischen den Sendeantennen sowie die Relativabstände zwischen den Empfangsantennen zueinander korrekt dargestellt. Die relative Anordnung der Sendeantennen 14 zu den Empfangsantennen 12 kann hierbei variiert werden. Besonders vorteilhaft sind die Sendeantennen 14 vertikal unterhalb der Empfangsantennen 12 angeordnet. Diese Anordnung ist auch nach Anordnung des RADAR-Messsystems innerhalb des Fahrzeugs vorgesehen.

Die Empfangsantennen Rx1, Rx3 und Rx4 sind auf einer ersten Ebene 16 angeordnet. Entlang dieser ersten Ebene 16 weisen die Empfangsantennen einen gleichmäßigen ersten Abstand 16a zueinander auf. Der erste Abstand 16a entspricht hierbei 3λ, wobei λ der ausgesendeten und empfangene Wellenlänge der elektromagnetischen Strahlung des RADAR-Maßsystems entspricht. Die Anordnung der Empfangsantennen Rx1, Rx3 und Rx4 entspricht der Positionierung der Antennen an gleichmäßig entlang der ersten Ebene 16 angeordneten Rastpositionen einer Rasterverteilung.

Die erste Ebene 16 erstreckt sich in der Figur 1 entlang einer horizontalen Richtung. Das Empfangselement Rx2 ist gegenüber der ersten Ebene 16 um einen in einen ersten Ebenenabstand 16b in einer ersten Richtung 18 in vertikaler Richtung nach oben verschoben. Die erste Richtung 18a zeigt in vertikaler Richtung nach oben und steht senkrecht zur ersten Ebene 16. Der erste Ebenenabstand 16b entspricht dem Wert 1,5 λ. Insbesondere entspicht der erste Abstand 16a einem Vielfachen des Abstandes 16b, hierbei dem doppelten Wert. Durch den vertikalen Versatz des Empfangselements Rx2 gegenüber den anderen Empfangselementen wird eine Auflösung des RADAR-Messsystems in Elevationsrichtung bereitgestellt.

Das Empfangselement Rx2 weist gegenüber dem Empfangselement Rx3 einen abweichenden Abstand 16c entlang der Ebene 16 auf. Der erste Abstand 16a und der abweichende Abstand 16c sind kein Vielfaches voneinander. Der abweichende Abstand 16c beträgt 1,29 λ.

Die Empfangselemente Rx1, Rx3, Rx4 werden Ziele detektiert und deren Positions- und Geschwindigkeitsinformationen ermittelt. Stehen nur die gleichmäßig angeordneten Empfangselemente zur Verfügung so sind die ermittelten Informationen mehrdeutig. Das außerhalb der gleichmäßigen Verteilung entlang der ersten Ebene 16 angeordnete Empfangselement Rx2 stellt eine zusätzliche Informationsquelle dar durch welche die Mehrdeutigkeit aufgelöst werden kann und die Ziele eindeutig bestimmt werden können.

Es ist zu bemerken, dass die Empfangselemente Rx1, Rx3 und Rx4 gleichmäßig mit demselben ersten Abstand 16a auf derselben Ebene 16 angeordnet sind. Demgegenüber ist das Empfangselement Rx2 einerseits über den Abstand 16b gegenüber der ersten Ebene 16 versetzt und zudem außerhalb der gleichmäßigen Anordnung entlang der ersten Ebene 16 ausgebildet. Das Empfangselement Rx2 vereint somit beide Abweichungen von dem ansonsten gleichmäßigen Aufbau der Empfangsantennen Rx1, Rx3, Rx4 in einer einzigen Empfangsantenne Rx2.

Bezüglich der gegenüber der ersten Ebene 16 in Richtung 18 vertikal versetzten Empfangsantenne Rx2 handelt es sich um eine der mittleren Empfangsantennen. Insbesondere handelt es sich in Bezug die Empfangsantennen nicht auf die entlang der ersten Ebene 16 außenliegenden Antennen.

Die Sendeantenne Tx1 und Tx3 sind auf einer zweiten Ebene 20 angeordnet. Die zweite Ebene 20 erstreckt sich ebenfalls in horizontaler Richtung und ist parallel zur ersten Ebene 16 ausgebildet. Die Sendeantennen 14 sind entlang der zweiten Ebene 20 an Rasterpositionen 24 angeordnet, wobei die Rasterpositionen entlang der zweiten Ebene 20 zueinander einen gleichmäßigen Rasterabstand 24a aufweisen. Der Rasterabstand 24a entspricht dem minimalen Abstand von zwei benachbarten Sendeantennen 14, der auch zweiter Abstand 20a genannt wird. Die drei Sendeantennen 14 besetzen hierbei drei von vier Rasterpositionen 24. Der Rasterabstand 24a und auch der zweite Abstand 20a betragen 3λ. Der Abstand zwischen zwei beliebigen Sendeantennen 14 entspricht dem zweiten Abstand 20a oder einem Vielfachen des zweiten Abstands 20a. Es sind alle Sendeantennen 14 auf den Rasterpositionen angeordnet. Dementsprechend ist keine Sendeantenne 14 gegenüber der Rasterposition 24 entlang der zweiten Ebene 20 versetzt angeordnet.

Der Rastabstand 24a und der zweite Abstand 20a sind identisch zu dem ersten Abstand 16a ausgebildet. Insbesondere entspricht der Abstand zwischen dem Sendeelement Tx1 und dem Sendelement Tx2 dem Wert 3λ, wohingegen der Abstand zwischen dem Sendelement Tx2 und dem Sendeelement Tx3 dem Wert 6λ, also dem doppelten des zweiten Abstands 20a, entspricht.

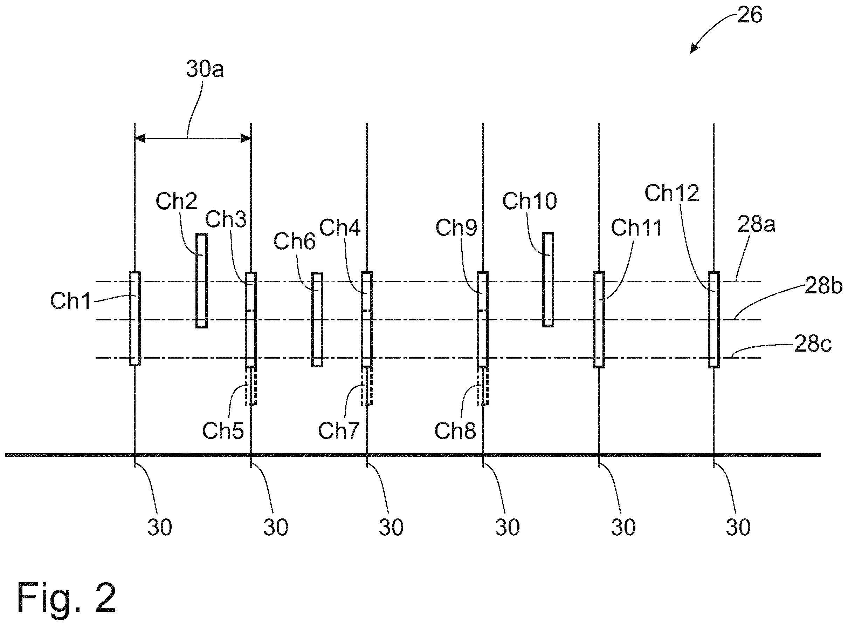

Die mittlere Sendeantenne Tx2 der drei Sendeantennen 14 ist gegenüber der zweiten Ebene 20 in Richtung 22 um einen zweiten Ebenenabstand 20b verschoben. Insbesondere beträgt der zweite Ebenenabstand 20b den Wert 1,5 λ. Der zweite Ebenenabstand 20b ist identisch zu dem ersten Ebenenabstand 16b. Zudem entspricht der zweite Abstand 20a einem Vielfachen des zweiten Ebenenabstands 20b, insbesondere dem doppelten. Der Versatz des Sendeelementes Tx2 erfolgt entlang der Richtung 22, die senkrecht auf der zweiten Ebene steht und zudem in die entgegengesetzte Richtung der Richtung 18 zeigt. Die Richtung 22 weist bezüglich der Figur 2 in vertikaler Richtung nach unten. Mit anderen Worten ist das Empfangselement Rx2 in die entgegengesetzte Richtung im Vergleich zu dem Sendelement Tx2 versetzt. Das Sendeelement Rx2, welches außerhalb der zweiten Ebene angeordnet ist, weist keine Abweichung von den gleichmäßig verteilten Rasterpositionen 24 auf.

Die Antennenanordnung 10 gemäß Figur 1 stellt ein virtuelles Antennen Array 26 mit zwölf virtuellen Kanälen Ch1 bis Ch12 bereit. Die virtuellen Kanäle Ch1 bis Ch12 verteilen sich innerhalb des virtuellen Antennen Arrays auf drei virtuelle Ebenen 28a, b, c. Da sich die virtuellen Kanäle in der Darstellung der Figur 2 teilweise überlappen sind die virtuellen Kanäle Ch5, Ch7 und Ch8 der virtuellen Ebene 28c zur besseren Erkennbarkeit gestrichelt dargestellt. Die virtuelle Ebene 28a bildet in Bezug auf die Darstellung eine obere virtuelle Ebene, die virtuelle Ebene 28b eine zentrale virtuelle Ebene und die virtuelle Ebene 28c eine untere virtuelle Ebene. Die virtuellen Ebenen 28 erstrecken sich entlang einer horizontalen Richtung. Die vertikalen Abstände zwischen den Kanälen 28 entsprechen dem ersten Ebenenabstand 16b und dem zweiten Ebenenabstand 20b. Durch die Identität des ersten Ebenenabstands 16b und des zweiten Ebenenabstands 20b werden im virtuellen Antennenarray genau drei virtuelle Ebenen mit virtuellen Kanälen bereitgestellt.

Zudem sind in der Darstellung nach Figur 2 eine Mehrzahl an gleichmäßigen virtuellen Rasterpositionen 30 dargestellt. Die virtuellen Rasterpositionen 30 weisen entlang der Erstreckungsrichtung der virtuellen Ebenen 28 einen virtuellen Abstand 30a auf. Der virtuelle Abstand 30a entspricht dem ersten Abstand 16a und dem zweiten Abstand 16b entsprechen, die beide identisch gewählt sind.

Durch die Wahl des identischen ersten Abstands 16a und des zweiten Abstands 20a wird diese gleichmäßige Verteilung im virtuellen Antennen Array 26 bereitgestellt. Dadurch ergibt sich der besondere Vorteil, dass die virtuellen Kanäle Ch1, Ch3, Ch4, Ch9, Ch11, Ch12 der zentralen virtuellen Ebene 28b alle virtuellen und gleichmäßig verteilten Rasterpositionen ohne Lücke besetzen. Die virtuellen Kanäle Ch1, Ch3, Ch4, Ch9, Ch11, Ch12der zentralen Ebene 28b sind somit ebenfalls gleichmäßig entlang der zentralen virtuellen Ebene 28b verteilt. Dadurch wird in Azimutrichtung eine genaue Detektion von Zielen bereitgestellt.

Zusätzlich hierzu ist der virtuelle Kanal Ch6 außerhalb des gleichmäßigen Rasters angeordnet. Insbesondere weist der virtuelle Kanal Ch6 einen Abstand von seinen benachbarten auf, der keinem vielfachen des virtuellen Abstands 30a entspricht. Durch diese Anordnung es virtuellen Kanals Ch6 wird eine eindeutige Bestimmung von Zielen Bereitgestellt.

Des Weiteren sind die virtuellen Kanäle Ch2 und Ch10 auf der oberen Ebenen 28a angeordnet und um ein Vielfaches des Abstands 30a, insbesondere des ersten Abstands 16a und des zweiten Abstands 20a, voneinander beabstandet. Die Kanäle Ch5, Ch7 und Ch8 der unteren Ebene sind auf drei benachbart zueinander angeordneten Rasterpositionen 30 bereitgestellt.

Insbesondere wird durch diese Antennenanordnung und das zugehörige virtuelle Antennen Array 26 ein kostengünstiges und effizientes RADAR-Messsystem bereitgestellt, welches eine präzise Detektion von Zielen über Azimut und Elevation ermöglicht.

### Bezugszeichen

- 10: Antennenanordnung
- 12, Rx1-4: Empfangsantenne
- 14, Tx1-3: Sendeantenne
- 16: erste Ebene
- 16a: erster Abstand
- 16b: erster Ebenenabstand
- 16c: abweichender Abstand
- 18: erste Richtung
- 20: zweite Ebene
- 20a: zweiter Abstand
- 20b: erster Ebenenabstand
- 22: zweite Richtung
- 24: Rasterpositionen
- 24a: Rasterabstand
- 26: virtuelles Antennen Array
- Ch1-12: virtueller Kanal
- 28a,b,c: virtuelle Ebene
- 30: virtuelle Rasterposition
- 30a: virtueller Abstand

## Patentansprüche

1. Antennenanordnung (10) für ein RADAR Messsystem, umfassend
• mehrere Empfangsantennen (12) und mehrere Sendeantennen (14),
• wobei ein Großteil der Empfangsantennen (Rx1, Rx3, Rx4) in einer ersten Ebene (16) liegen und entlang dieser ersten Ebene (16) angeordnet sind und
• wobei ein Großteil der Sendeantennen (Tx1, Tx3) in einer zweiten Ebene (20) liegen und entlang dieser zweiten Ebene (20) angeordnet sind,
• wobei eine der Empfangsantennen (Rx2) in einer ersten Richtung (18) außerhalb der ersten Ebene (16) angeordnet ist und einen ersten Ebenenabstand (16b) zu der ersten Ebene (16) aufweist,
• wobei eine der Sendeantennen (Tx2) in einer zweiten Richtung (22) außerhalb der zweiten Ebene (20) angeordnet ist und einen zweiten Ebenenabstand (20b) zu der zweiten Ebene (20) aufweist,
**dadurch gekennzeichnet, dass** die zweite Richtung (22) entgegengesetzt der ersten Richtung (18) weist.

2. Antennenanordnung (10) nach einem der vorhergehenden Ansprüche, **dadurch gekennzeichnet, dass** der erste Ebenenabstand (16b) und der zweite Ebenenabstand (20b) identisch sind.

3. Antennenanordnung (10) nach einem der vorhergehenden Ansprüche, **dadurch gekennzeichnet, dass** ein Großteil der Empfangsantennen (Rx1, Rx3, Rx4) entlang der ersten Ebene (16) einen gleichmäßigen ersten Abstand (16a) zueinander aufweisen.

4. Antennenanordnung (10) nach einem der vorhergehenden Ansprüche, **dadurch gekennzeichnet, dass** zumindest eine der Empfangsantennen (Rx2) entlang der ersten Ebene (16) einen abweichenden Abstand (16c) von einer benachbarten Empfangsantennen (Rx3) aufweist, der von dem ersten Abstand (16a) abweicht.

5. Antennenanordnung (10) nach einem der vorhergehenden Ansprüche, **dadurch gekennzeichnet, dass** die Empfangsantenne (Rx2) die von der ersten Ebene (16) beabstandet ausgebildet ist zugleich den abweichenden Abstand (16c) ausbildet.

6. Antennenanordnung (10) nach einem der vorhergehenden Ansprüche, **dadurch gekennzeichnet, dass** der Abstand benachbarter Sendenannten (14) einem zweiten Abstand (20a) oder einem Vielfachen des zweiten Abstands (20a) entspricht.

7. Antennenanordnung (10) nach einem der vorhergehenden Ansprüche, **dadurch gekennzeichnet, dass** der erste Abstand (16a) und der zweite Abstand (20a) identisch sind.

8. Antennenanordnung (10) nach einem der vorhergehenden Ansprüche, **dadurch gekennzeichnet, dass** die Antennenanordnung (10) 3 Sendeantennen (14) und 4 Empfangsantennen (12) aufweist.

9. RADAR Messsystem mit einer Antennenanordnung (10) nach einem der vorhergehen Ansprüche.

10. RADAR Messsystem nach dem vorhergehenden Anspruch, **dadurch gekennzeichnet, dass** ein einzelner Chip ausgebildet ist, der die Rohdaten der Antennenanordnung (10) ausgewertet.
